# EUROPÄISCHE PATENTSCHRIFT

(11) **EP 0 519 582 B1**
(45) Veröffentlichungstag und Bekanntmachung des Hinweises auf die Patenterteilung: **13.09.1995**
(21) Anmeldenummer: 92250145.7
(22) Anmeldetag: 11.06.1992
(51) Int. Cl.: F16L 15/00, F16L 55/00

(54) **Gasdichte Rohrverbindung**
Gas-tight pipe coupling
Raccord de tuyaux étanche au gaz

(30) Priorität: 21.06.1991 DE 4120998
(43) Veröffentlichungstag der Anmeldung: 23.12.1992
(73) Patentinhaber: MANNESMANN Aktiengesellschaft, 40027 Düsseldorf (DE)
(72) Erfinder: Krings, Reiner, W-4000 Düsseldorf (DE); Langer, Erwin, W-4030 Ratingen (DE); Lenze, Friedrich, W-4030 Ratingen 4 (DE)
(74) Vertreter: Meissner, Peter E., Dipl.-Ing.

(56) Entgegenhaltungen:
- CH-A- 479 017
- DE-A- 3 312 528
- DE-C- 3 913 314
- US-A- 2 559 806
- US-A- 2 671 949

## Beschreibung

Die Erfindung betrifft eine gasdichte Rohrverbindung gemäß dem Gattungsbegriff des Hauptanspruches.

Die Rohrverbindung eines aus miteinander verschraubbaren Gewinderohren bestehenden Stranges für den Einsatz in der Erdöl- und Erdgasindustrie hat zum einen die Aufgabe, die Stranglast aufzunehmen und zum anderen die Dichtheit der Verbindung zu sichern. Zur Erfüllung dieser Aufgabe weist der Gewindeabschnitt der Rohrenden und der Muffe zum Beispiel ein konisches API-Gewinde mit einer entsprechenden Überdeckung auf. Bedingt durch die Gewindeüberdeckung entstehen beim Verschrauben hohe Oberflächenpressungen. Zur Beherrschung dieser großen Belastung wurden Oberflächenbeschichtungen und Fette entwickelt, die ein Verschrauben ohne Fressen ermöglicht. Diese Gewindefette sind schmierfähige Pasten mit einem hohen Anteil an feinverteilten Feststoffpartikeln, wie z. B. Graphit, Metalle oder Teflon. Außer einem problemlosen Verschrauben unterstützen diese Fette die hydraulische Dichtheit im Gewindebereich der Verbindung, der als Labyrinthdichtung wirkt.

Bei den von verschiedenen Herstellern entwickelten gasdichten Verbindungen wird die Dichtheit der Verbindung zumeist durch eine hohe Kontaktpressung aufgrund einer Überdeckung im metallischen Dichtsitz erzielt.

Die Stoßschultern dienen als Einschraubbegrenzung und sie sorgen dafür, daß trotz steigender Stranglast der metallische Dichtsitz aktiviert bleibt. Das konische Gewinde braucht demzufolge keine Dichtfunktion zu übernehmen und seine Aufgabe besteht im Gegensatz zum API-Rund- bzw. Buttress-Gewinde nur in der Übertragung der Stranglast. Um gasdichte Verbindungen im Gewinde- und Dichtsitzbereich zuverlässig verschrauben zu können, werden auch bei diesen Rohrverbindungen bislang Oberflächenbeschichtungen und Feststoffschmierpasten verwendet, um Freßerscheinungen auszuschalten und Mehrfachverschraubungen zu ermöglichen. Der große Nachteil bei Verwendung von Feststoffschmierpasten bzw. Verschraubfetten bei gasdichten Verbindungen mit konischen Gewindeabschnitten ist, daß sie im Gewindebereich eine hohe temporäre Dichtwirkung erzeugen, die eine Überprüfung der Dichtheit nur des metallischen Dichtsitzes nicht zuläßt. Wird eine gasdichte Verbindung nach dem Verschrauben auf Dichtheit getestet, so gibt das Testergebnis aufgrund des temporären Dichtverhaltens des Gewindebereiches keine gesicherte Aussage über die Dichtheit der metallischen Dichtung, obwohl die eingesetzten Lecktestverfahren in der Lage sind Leckageraten von weniger als 1 Liter pro Jahr zu detektieren und die Testdrücke im Bereich der Mindest-Innendruckfestigkeit des Rohres bzw. der Verbindung liegen. Die beim Einbau im Feld zur Verfügung stehende Prüfzeit (1 - 3 Minuten) reicht insbesondere bei niedrigen Prüfdrücken bei weitem nicht aus, die durch das Verschraubfett erzeugte temporäre Dichtung sicher zu überwinden. Wie entsprechende Versuche gezeigt haben, wird deshalb bei Verwendung von Gewindefetten sehr oft eine Gasdichtheit nur vorgetäuscht. Die Versuche haben weiterhin gezeigt, daß mit steigendem Rohrdurchmesser aufgrund des größeren Gewindewiderstandes und bedingt durch eine meist zusätzlich vergrößerte Gewindelänge die Pseudodichtheit zunimmt. Außerdem können bei größeren Rohren, d. h. mit einem Außendurchmesser größer 7'' sowie geringen Wanddicken bzw. kleinen s/d-Verhältnissen beim Leckagetest keine so hohen Prüfdrücke verglichen mit kleineren Rohren angewandt werden. Da die Zeit, in der das Prüfgas die Gewindelänge passiert, im wesentlichen vom Druck abhängig ist, ist bei größeren Rohren mit einer Zunahme des Anteils pseudodichter Verbindungen zu rechnen.

Eine der Möglichkeiten dieses Problem zu überwinden ist, das temporäre Dichtvermögen des Gewindes erheblich zu verringern, z. B. durch Verwendung eines niedrigviskosen Öles, z.B. Gleitbahnöl als Schmiermittel statt eines hochviskosen API-Fettes (DE-PS 3913314). Im Unterschied zur Verwendung eines API-Fettes als Schmiermittel beim Verschrauben der Rohre kann das im Dichtheitstest verwendete Prüfgas den in den Gewindegängen eingeschlossenen Ölfilm in kurzer Zeit durchdringen und detektiert werden, falls der metallische Dichtsitz undicht sein sollte. Aber auch dieses Verfahren findet seine Grenze dort, wenn bei der Kombination großer Durchmesser, dünne Wand, geringer Werkstoffgütegrad der Prüfdruck auf unter 300 bar reduziert werden muß. Unter diesen Bedingungen wird die Zeit für das Durchströmen des Prüfgases auch bei einem niedrigviskosen Öl soweit verlängert, daß sie übliche Prüfzeiten übersteigt. Dies bedeutet, daß selbst bei Verwendung eines Gleitbahnöles eine Pseudodichtheit vorgetäuscht werden kann, auch dann, wenn wesentlich längere Prüfzeiten als üblich Anwendung finden. Das wäre zusätzlich eine aus Gründen von Kosten und Gefahrminimierung nicht hinnehmbare Verlängerung der Einbauzeiten.

Eine gattungsbildende gasdichte Rohrverbindung ist in der DE-A-33 12 528 offenbart. Bei dieser Konstruktion ist zur Unterstützung des metallischen Dichtsitzes eine Kunststoffdichtung in einer Nut der Muffe angeordnet. Zwischen dieser Dichtung und dem Innengewindeabschnitt erstreckt sich radial durch die Wandung der Muffe eine Bohrung. Diese Bohrung soll eine Ausbauchen der Muffe und damit ein Lösen der Verbindung verhindern, falls sowohl der metallische Dichtsitz als auch die zusätzlich angeordnete Dichtung versagen sollte.

Aufgabe der Erfindung ist es, eine gasdichte Rohrverbindung anzugeben, mit der reproduzierbar in einer Prüfzeit von weniger als 60 Sekunden und ohne Beeinträchtigung des Dichtsitzbereiches die Dichtheit der Verbindung sicher überprüft werden kann.

Diese Aufgabe wird durch die Merkmale von Anspruch 1 gelöst.

Die Muffe weist im jeweiligen Bereich des gewindefreien Abschnittes zwischen dem metallischen Dichtsitz und dem Innengewindebereich eine durch die Wandung sich erstreckende Öffnung auf. Durch die Anordnung der Öffnung wird der Gewindebereich als mögliche Zusatzdichtung überbrückt. Falls einer der beiden metallischen Dichtsitze undicht sein sollte, kann das Prüfgas In kürzester Zeit ohne über den Umweg der Gewindegänge von innen nach außen durch die Öffnung strömen und sofort detektiert werden. Damit die Öffnung den Dichtsitz- und Gewindebereich nicht störend beeinflußt, mündet die Öffnung auf der Innenseite der Muffe in der Hohlkehle des innenliegenden Gewindeauslaufes. Diese Stelle ist unkritisch, da weder das Verschraubgewinde noch der empfindliche Dichtsitzbereich der Muffe dadurch beeinflußt werden.

Prinzipiell braucht die Öffnung nach dem erfolgreichen Leckagetest nicht verschlossen zu werden, da zuvor die Dichtheit der beiden metallischen Dichtsitze festgestellt wurde. Nun können sich aber äußere Bedingungen ergeben, die ein Verschließen der Öffnung zweckdienlich erscheinen lassen. Das wird der Fall sein, wenn der Außendruck Werte erreicht, die die Spannungsverhältnisse im Dichtsitzbereich ungünstig beeinflussen könnten oder wenn von außen korrosionsfördernde Medien Zugang zu dem Raum unmittelbar vor dem metallischen Dichtsitz hätten.

Im Sinne der möglichen Wiederholung des Leckagetests wird vorgeschlagen, die Bohrung mit einem Gewindeabschnitt zu versehen und einen Gewindestift gasdicht einzuschrauben. Die Gasdichtheit könnte beispielsweise durch entsprechende aufgetragene Dichtmittel beim Einschrauben sichergestellt werden. Eine andere Möglichkeit besteht darin, in der Bohrung einen gewindefreien Abschnitt mit einem Durchmessersprung vorzusehen. Dieser Durchmessersprung würde als Dichtfläche ausgebildet werden, so daß beim Einschrauben des Gewindestiftes, dessen Spitze im wesentlichen keglig ist, ein Dichtsitz gebildet wird. Eine weitere Variante würde darin bestehen, die Spitze des Gewindestiftes kalottenförmig auszubilden und eine Dichtkugel einzupressen.

Die Anwendung der erfindungsgemäßen gasdichten Rohrverbindung ist nicht auf Rohre mit kleinem s/d-Verhältnis und geringen Werkstoffgütegraden beschränkt, sondern ist ebenso vorteilhaft auch für kleinere Abmessungen. In diesem Falle könnte man auf die Verwendung von Gleitbahnöl verzichten. Das hätte den Vorteil, daß für den Anwender im Feld keine gesonderte und zusätzliche Lagerhaltung erforderlich wäre, da er auf die bereits bewährten API-Fette zurückgreifen könnte. Im Falle des Einsatzes von hochlegierten austenitischen Werkstoffen wäre diese Art von Rohrverbindung ebenfalls von Vorteil, da bei diesen Werkstoffen trotz Beschichtung gegen Fressen die Wiederverschraubbarkeit bei Verwendung von Gleitbahnöl eingeschränkt wird. Hier ist man in jedem Falle darauf angewiesen entsprechende Fette, die eine temporäre Dichtheit in den Gewindegängen erzeugen können, zu verwenden.

In der Zeichnung wird die erfindungsgemäße gasdichte Rohrverbindung näher erläutert.

Es zeigen:
- Figur 1: einen hälftigen Längsschnitt durch eine Muffenhälfte mit der erfindungsgemäßen Öffnung
- Figur 2: wie Fig. 1 jedoch eine Vergrößerung des interessierenden Bereiches
- Figur 3: einen Gewindestift mit kegeliger Spitze
- Figur 4: einen Gewindestift mit gewindefreiem zylindrischen Abschnitt im eingeschraubten Zustand
- Figur 5: einen Gewindestift mit eingefaßter, beweglicher Dichtkugel
- Figur 6: einen Gewindestift mit separater Kugel im eingeschraubten Zustand
- Figur 7: einen Längsschnitt durch die Anordnung für den Gasdichtheitstest

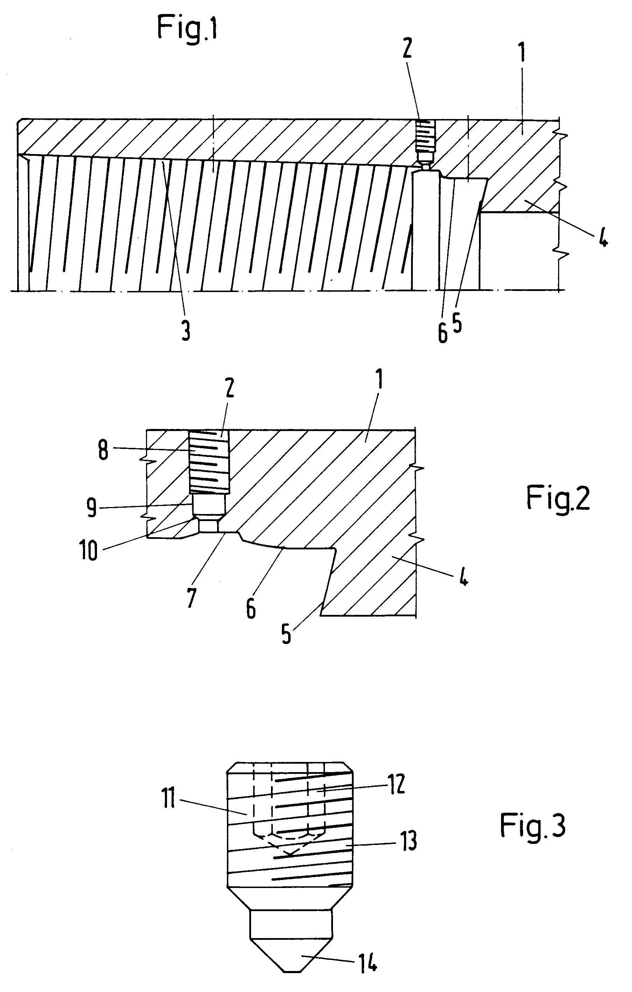

In den Figuren 1 und 2 ist in einem hälftigen Längsschnitt eine Muffenhälfte 1 mit der erfindungsgemäßen Öffnung 2 dargestellt. Die Muffe 1 weist einen vom Ende der Muffe 1 bis zum in der Mitte liegenden gewindefreien Abschnitt sich erstreckenden Innengewindeabschnitt 3 auf, der in diesem Ausführungsbeispiel konisch ist. Die Stirnfläche des in der Mitte des gewindefreien Abschnittes liegenden radial nach innen sich erstreckenden Steges 4 ist als Stoßschulter 5 ausgebildet. In diesem Ausführungsbeispiel ist die Stoßschulter 5 um 15 Grad gegenüber der Vertikalen geneigt. An die Stoßschulter 5 schließt sich auswärts der umfangsseitig wirkende Dichtsitzbereich 6 der Muffe 1 an. Danach folgt ein Übergangsbereich, im Ausführungsbeispiel in Form einer Hohlkehle 7. Dieser ist erforderlich, damit das Schneidwerkzeug für das Schneiden des Innengewindeabschnittes 3 einen Auslauf hat. Dieser Bereich der Hohlkehle 7 wird als Mündung auf der Innenseite der Muffe 1 der durch die Wandung sich erstreckenden Öffnung 2 gewählt. Diese Stelle hat den Vorteil, daß durch die Öffnung 2 die Funktion weder des Gewindebereiches 3 noch des empfindlichen Dichtsitzbereiches 6 in irgendeiner Weise beeinträchtigt wird. Damit die Öffnung 2 nach dem Leckagetest wieder gasdicht geschlossen werden kann, weist in diesem Ausführungsbeispiel die Öffnung 2 einen Gewindeabschnitt 8 und einen gewindefreien Abschnitt 9 auf. Der gewindefreie Abschnitt 9 ist im Durchmesser gestuft, so daß sich eine Sprungstelle 10 ergibt, die als Dichtsitzfläche ausgebildet ist. Ein in eine solche Bohrung 2 einschraubbarer Gewindestift 11 ist in Figur 3 dargestellt. Er weist einen Innensechskant 12 zum Ansatz eines Schlüssels auf und im Kopfbereich einen Gewindeabschnitt 13. Die Spitze 14 ist kegelig ausgebildet, die dann mit der Dichtsitzfläche 10 der Öffnung 2 zusammenwirkt.

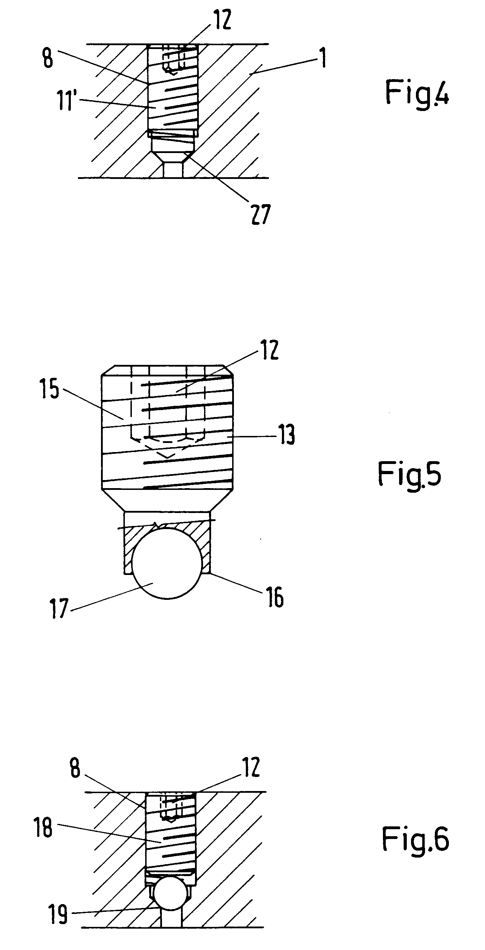

Figur 4 zeigt eine weitere Ausführungsform eines Gewindestiftes 11' im eingeschraubten Zustand, wobei ein zylindrischer gewindefreier Abschnitt mit dem kegelig gestalteten Durchmessersprung 14 einen Dichtsitz bildet.

In Figur 5 ist eine andere Ausführungsform eines Gewindestiftes 15 dargestellt. Auch dieser weist einen Innensechskant 12 und einen Gewindeabschnitt 13 auf. Die Spitze ist kalottenförmig 16 ausgebildet und umfaßt eine bewegliche Dichtkugel 17.

In Figur 6 ist im eingeschraubten Zustand eine ähnliche Anordnung wie die der Fig. 5 dargestellt. Der Gewindestift 18 ist an seiner Spitze eben ausgebildet und drückt auf eine separate Dichtkugel 19.

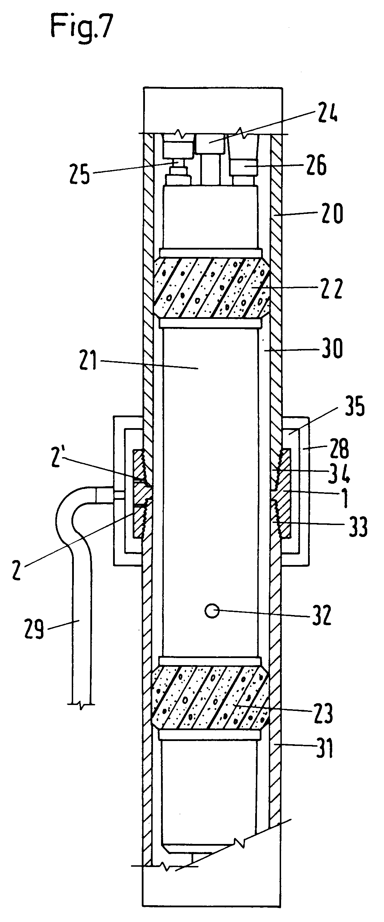

In Figur 7 ist in einem Längsschnitt die Anordnung für den Gasdichtheitstest dargestellt. Nach dem Verschrauben wird durch das in der Muffe 1 eingeschraubte Rohr 20 ein Prüfdorn 21 mit zwei im Abstand voneinander angeordneten Packerelementen 22,23 eingeführt. Der Prüfdorn 21 ist an seinem oberen Ende mit einem Drahtseil 24 und einer flexiblen Hydraulikleitung 25 für das Setzen der Packerelemente 22,23 und einer Prüfgasleitung 26 verbunden. Die Gasdetektionsleitung 29, die mit dem hier nicht dargestellten Detektor, z.B. einem Gaschromatographen verbunden ist, kann in üblicher Weise an ein geteiltes Mantelrohr 28 angeschlossen sein, das um die Rohrverbindung gelegt wird. Zweckmässigerweise wird es jedoch direkt in die Detektionsöffnungen 2 bzw. 2' der Muffe 1 geführt. Es erlaubt dadurch im Falle einer Leckage die direkte Zuordnung zur oberen-feldverschraubten- oder zur unteren-werksverschraubten-Verbindungsseite. Damit das zugeführte Prüfgas in den Ringraum 30, der gebildet wird durch den Außenmantel des Prüfdornes 21 zwischen den Packerelementen und der Innenfläche der Rohre 20,31, einströmen kann, weist der Prüfdorn 21 mindestens eine oder mehrere Öffnungen 32 auf. Die Muffe 1, die die beiden Rohre 20,31, deren Rohrenden als Zapfen 33,34 ausgebildet sind, miteinander verbindet, weist erfindungsgemäß je eine durch die Wandung sich erstreckende Öffnung 2,2' auf.

Das Prüfverfahren läuft nun in der Weise ab, daß der Ringraum 30 mittels des zugeführten Prüfgases unter Druck gesetzt wird, z. B. mit genormten Prüfdrücken, wobei die hydraulischen Packerelemente 22,23 für die erforderliche Dichtung des Prüfraumes sorgen. Sollte die Rohrverbindung im Bereich eines der metallischen Dichtsitze oder beider undicht sein, so würde das Prüfgas über die Öffnung(en) 2,2' in den durch das Mantelrohr 28 und der äußeren Oberfläche der Rohrverbindung gebildeten Ringraum 35 strömen. Von dort würde es über die Detektionsleitung 29 dem Detektor zugeführt werden, der dann eine entsprechende Anzeige auslösen würde. Bei der eleganteren Lösung würde das Prüfgas unter Wegfall des Mantelrohres 28 direkt über die Öffnung(en) 2,2' in die Detektionsleitung 29 strömen. Nach der Durchführung eines erfolgreichen Leckagetests würden während oder nach dem Entfernen der Prüfvorrichtung die Öffnungen 2,2' mit einem Gewindestift, z.B. der Ausführungsform 11 mit einer kegeligen Spitze 14 (siehe Fig. 3) verschlossen werden.

Der Vorteil der erfindungsgemäßen Muffe 1 ist darin zu sehen, daß unabhängig von der Gewindelänge und dem verwendeten Schmiermittel selbst bei einem niedrigen Prüfdruck die Undichtheit des metallischen Dichtsitzes bei einer kurzen Prüfzeit von z. B. 30 Sekunden oder weniger sicher detektiert wird.

## Patentansprüche

1. Gasdichte Rohrverbindung bestehend aus einer Muffe (1), die zwei vom jeweiligen Ende der Muffe (1) bis zu einem in der Mitte liegenden gewindefreien Abschnitt sich erstreckende Innengewindeabschnitte (3) und ein in der Mitte des gewindefreien Abschnittes liegenden radial nach innen und über eine bestimmte Breite sich erstreckenden Steg (4) aufweist, dessen Stirnflächen als Stoßschulter (5) ausgebildet sind, sowie einen zum Gewinde (3) hin sich anschließenden Dichtbereich (6) und zwei Rohren (20,31), die im Rohrendenbereich (33,34) jeweils einen komplementär zur Muffe (1) ausgebildeten Gewindeabschnitt und eine Stoßschulter mit dazwischen angeordneter Dichtfläche aufweisen und die Muffe (1) im jeweiligen Bereich des gewindefreien Abschnittes zwischen dem metallischen Dichtsitz (6) und dem Innengewindebereich (3) mit einer durch die Wandung sich erstreckenden Bohrung (2,2') versehen ist,
dadurch gekennzeichnet,'
daß die Bohrung (2,2') einen Gewindeabschnitt (8) aufweist.

2. Gasdichte Rohrverbindung nach Anspruch 1,
dadurch gekennzeichnet,
daß sich an den Gewindeabschnitt (8) ein gewindefreier Abschnitt (9) mit einem rechtwinklig oder kegelig ausgeführten Durchmessersprung (10) anschließt, der als Dichtsitzfläche ausgebildet ist.

3. Gasdichte Rohrverbindung nach Anspruch 2,
dadurch gekennzeichnet,
daß in die Bohrung (2,2') ein Gewindestift (11) einschraubbar ist, dessen gewindefreie Spitze im wesentlichen kegelig (14) ausgebildet ist.

4. Gasdichte rohrverbindung nach Anspruch 2,
dadurch gekennzeichnet,
daß in die Bohrung (2,2') ein Gewindestift (15) einschraubbar ist, dessen gewindefreie Spitze als Kalotte (16) ausgebildet ist.

5. Gasdichte Rohrverbindung nach Anspruch 2,
dadurch gekennzeichnet,
daß in die Bohrung (2,2') ein Gewindestift (11') mit einem gewindefreien zylindrischen Ende (27) einschraubbar ist.

## Claims

1. Gastight pipe connection comprising one sleeve (1) which has two inner thread-sections (3), extending from a given end of a sleeve (1) to a thread-free section lying centrally, and a flange (4) which extends radially inwards over a certain width and which is placed centrally in a thread-free section, a said flange (4) having end faces developed as an abutment shoulder (5), and an adjoined sealed zone (6) extending as far as a thread (3) and two pipes (20, 31) which, in a pipe-end zone (33. 34), each have a thread-section developed so as to be complementary to a sleeve (1), and an abutment shoulder, with a seal surface disposed between them, and a sleeve (1) is provided with a boring (2,2') which, between a metal seal (6) and an inner thread zone (3), extends through walling in a relevant zone of a thread-free section,
wherein
a boring (2,2') has a thread-section (8).

2. Gastight pipe connection in accordance with claim 1,
wherein
a thread-free section (9) with a right-angled or conically developed diametral spring (10), which is developed as a seal surface, adjoins a thread-section (8).

3. Gastight pipe connection in accordance with claim 2,
wherein
a threaded pin (11), a thread-free tip of which is developed essentially conically (14), can be bolted into a boring (2, 2').

4. Gastight pipe connection in accordance with claim 2,
wherein
a threaded pin (15), a thread-free tip of which is developed as a spherical indentation, can be bolted into a boring (2, 2').

5. Gastight pipe connection in accordance with claim 2,
wherein
a threaded pin (11') with a thread-free cylindrical end (27) is bolted into a boring (2, 2').

## Revendications

1. Liaison de tube étanche au gaz, comportant un manchon (1) qui comprend deux tronçons (3) à filetage interne s'étendant de l'extrémité correspondante du manchon (1) jusqu'à un tronçon sans filetage situé au centre et une nervure (4) située au centre du tronçon sans filetage et s'étendant radialement vers l'intérieur sur une largeur déterminée, dont les faces frontales sont réalisées sous forme de coudes d'appui (5), ainsi qu'une zone d'étanchéité (6) raccordée au filetage (3) et deux tubes (20,31) qui comportent dans la zone extrême du tube (33,34), à chaque fois, un tronçon fileté réalisé de façon complémentaire au manchon (1) et un coude d'appui avec une face d'étanchéité agencée entre, et le manchon (1) étant muni dans la zone correspondante du tronçon sans filetage, entre le siège d'étanchéité métallique (6) et la zone (3) à filetage interne, d'un perçage (2,2') s'étendant à travers la paroi,
caractérisée en ce que le perçage (2,2') présente un tronçon fileté (8).

2. Liaison de tube étanche au gaz selon la revendication 1,
caractérisée en ce qu'un tronçon (9) sans filetage, présentant un changement de diamètre (10) réalisé à angle droit ou de façon conique et formé comme face de siège d'étanchéité, est raccordé au tronçon fileté (8).

3. Liaison de tube étanche au gaz selon la revendication 2,
caractérisée en ce qu'une tige filetée (11) peut être vissée dans le perçage (2,2'), dont la pointe sans filetage est réalisée pour l'essentiel sous forme conique (14).

4. Liaison de tube étanche au gaz selon la revendication 2,
caractérisée en ce qu'une tige filetée (15) peut être vissée dans le perçage (2,2'), dont la pointe sans filetage est réalisée sous forme d'une calotte (16).

5. Liaison de tube étanche au gaz selon la revendication 2,
caractérisée en ce qu'une tige filetée (11') présentant une extrémité cylindrique (27) sans filetage peut être vissée dans le perçage (2,2').
